# EUROPEAN PATENT APPLICATION

(11) **EP 3 038 422 A1**
(43) Date of publication of application: **29.06.2016**
(21) Application number: 14838185.8
(22) Date of filing: 19.08.2014
(51) Int. Cl.: H04W 72/08, H04W 16/26, H04W 52/18

(54) **WIRELESS BASE STATION, RELAY STATION, AND WIRELESS COMMUNICATION METHOD**

(30) Priority: 23.08.2013 JP 2013172993
(71) Applicant: NTT DOCOMO, INC., Chiyoda-ku Tokyo 100-6150 (JP)
(72) Inventor: KISHIYAMA, Yoshihisa, Tokyo 100-6150 (JP); BENJEBBOUR, Anass, Tokyo 100-6150 (JP)
(74) Representative: Hoffmann Eitle
(86) International application number: PCT/JP2014/071661
(87) International publication number: WO 2015/025847

(57) **Abstract**

The present invention is designed to increase the capacity of backhaul links between radio base stations and relay stations. The present invention is designed so that a radio base station (BS) non-orthogonal-multiplexes downlink signals for a plurality of communication devices including at least one relay station, over the same radio resource, with different transmission power, and transmits the downlink signals to the plurality of communication devices with the different transmission power, and a relay station (RS) cancels interference by a downlink signal for another communication device, which is non-orthogonal-multiplexed in the radio base station, over the same radio resource, with the different transmission power, so as to receive a downlink signal for a lower communication device connected to the subject station, as a downlink signal for the subject station, and transmits the downlink signal to the lower communication device, using a radio resource that is different from the radio resource that is used in non-orthogonal-multiplexing in the radio base station.

## Description

### Technical Field

The present invention relates to a radio base station, a relay station and a radio communication method in a next-generation mobile communication system.

### Background Art

Conventionally, various radio communication schemes are used in radio communication systems. For example, in UMTS (Universal Mobile Telecommunications System), which is also referred to as "W-CDMA (Wideband Code Division Multiple Access)," code division multiple access (CDMA) is used. Also, in LTE (Long Term Evolution), orthogonal frequency division multiple access (OFDMA) is used (see, for example, non-patent literature 1).

### Citation List

### Non-Patent Literature

Non-Patent Literature 1: 3GPP TR 25.913 "Requirements for Evolved UTRA and Evolved UTRAN"

### Summary of Invention

### Technical Problem

Now, radio communication systems face the challenge of improving the throughput of cell-edge user terminals, in addition to realizing high-speed and high-capacity communication with OFDMA. As a solution for this, relay technology to relay radio communication between radio base stations and user terminals is under study. It is expected that the use of relay technology will make it possible to effectively expand the coverage in places where it is difficult to secure wired backhaul links. In radio communication systems where communication is carried out via such relay stations, there is a demand to increase the capacity of wireless backhaul links even more.

The present invention has been made in view of the above, and it is therefore an object of the present invention to provide a radio base station, a relay station and a radio communication method that can increase the capacity of wireless backhaul links between radio base stations and relay stations.

### Solution to Problem

A radio base station, according to the present invention, is a radio base station that is connected to a relay station via a backhaul link and communicates with a user terminal via the relay station, and this radio base station has a multiplexing section that non-orthogonal-multiplexes downlink signals for a plurality of communication devices, including at least one relay station, over a same radio resource, with different transmission power, and a transmission section that transmits the downlink signals to the plurality of communication devices with the different transmission power.

### Technical Advantage of Invention

According to the present invention, non-orthogonal multiple access, which carries out non-orthogonal multiplexing over the same radio resource, with different transmission power, is not only applied to access links that connect between radio base stations and user terminals, but is also applied to backhaul links that connect between radio base stations and relay stations. By this means, it is not only possible to increase the capacity of access links, but also to increase the capacity of backhaul links as well. Also, by applying non-orthogonal multiple access to various system implementations incorporating backhaul links, it is possible to increase the overall network capacity.

### Brief Description of Drawings

FIG. 1 is a diagram to explain NOMA (non-orthogonal multiple access);
FIG. 2 is a diagram to explain a system structure in which NOMA is employed;
FIG. 3 is a diagram to explain an example case where an advanced receiver is employed in a relay station;
FIG. 4 is a diagram to explain an example of communication steps among a radio base station, a user terminal and a relay station;
FIG. 5 is a diagram to explain an example of communication steps between a relay station and multi-hop relay stations;
FIG. 6 is a diagram to explain examples of downlink control information in control signals in NOMA;
FIG. 7 is a diagram to explain examples of uplink control information in control signals in NOMA;
FIG. 8 is a diagram to illustrate a functional block structure of a radio base station on the transmitting end; and
FIG. 9 is a diagram to illustrate a functional block structure of a relay station on the receiving end.

### Description of Embodiments

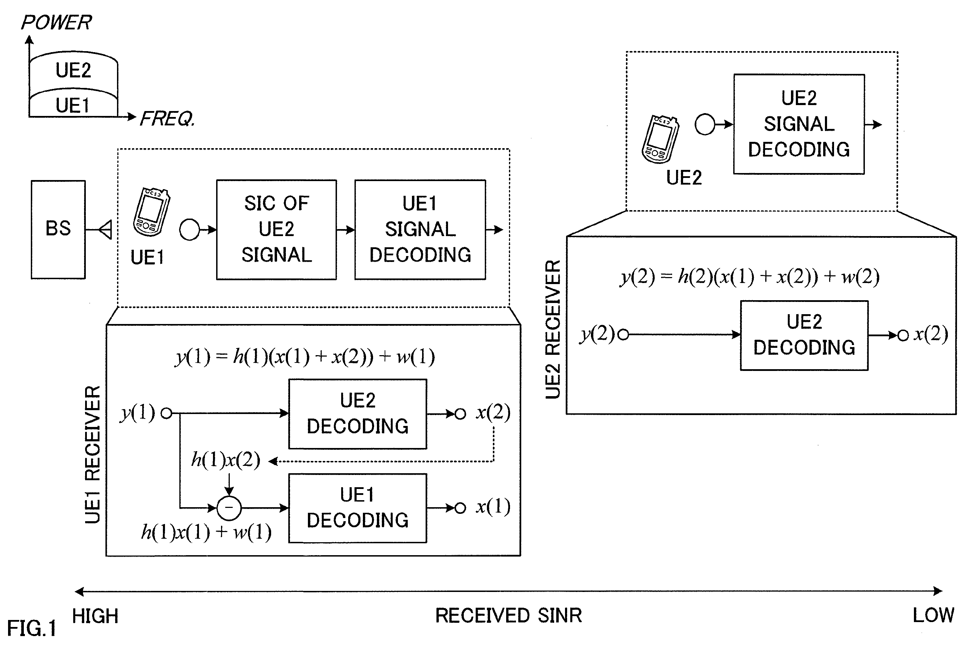

FIG. 1 is a diagram to explain non-orthogonal multiple access (NOMA) on the downlink. FIG. 1 illustrates a case where, in the coverage area of a radio base station BS, a user terminal UE 1 is located near the radio base station BS and a user terminal UE 2 is located far from the radio base station BS. The path loss of downlink signals from the radio base station BS to each of the user terminals UE 1 and UE 2 increases with the distance from the radio base station BS. Consequently, the received SINR (Signal to Interference plus Noise Ratio) at the user terminal UE 2 that is located far from the radio base station BS becomes lower than the received SINR at the user terminal UE 1 that is located near the radio base station BS.

In NOMA, a plurality of user terminals UE are non-orthogonal-multiplexed over the same radio resource by changing transmission power depending on channel gain such as the received SINR and the RSRP, path loss and so on. For example, in FIG. 1, downlink signals for the user terminals UE 1 and UE 2 are multiplexed over the same radio resource, with different transmission power. Also, the downlink signal for the user terminal UE 1 where the received SINR is high is allocated relatively small transmission power, and the downlink signal for the user terminal UE 2 where the received SINR is low is allocated relatively large transmission power.

Also, in NOMA, the downlink signal for a subject terminal is extracted by cancelling interference signals from received signals by means of an SIC (Successive Interference Cancellation), which implements a successive interference canceller-based signal separation method. For downlink signals directed to the subject terminal, downlink signals for other terminals that are non-orthogonal-multiplexed over the same radio resource with greater transmission power than that of the subject terminal become interference signals. Consequently, downlink signals for the subject terminal are extracted by cancelling downlink signals for other terminals with greater transmission power than that of the subject terminal from received signals.

For example, in FIG. 1, the received SINR of the user terminal UE 2 is lower than the received SINR of the user terminal UE 1, and therefore the downlink signal for the user terminal UE 2 is transmitted with greater transmission power than that of the downlink signal for the user terminal UE 1. Consequently, the user terminal UE 1 located near the radio base station BS not only receives the downlink signal for the subject terminal, but also receives the downlink signal for the user terminal UE 2 that is non-orthogonal-multiplexed over the same radio resource as an interference signal. The user terminal UE 1 extracts and adequately decodes the downlink signal for the subject terminal by removing the downlink signal for the user terminal UE 2 by means of an SIC.

Meanwhile, the received SINR at the user terminal UE 1 is higher than the received SINR at the user terminal UE 2, so that the downlink signal for the user terminal UE 1 is transmitted with smaller transmission power than the downlink signal for the user terminal UE 2. Consequently, the user terminal UE 2 located far from the radio base station BS can ignore the interference by the downlink signal for the user terminal UE 1 that is non-orthogonal-multiplexed over same radio resource, and adequately receive the downlink signal for the subject terminal. The user terminal UE 2 can ignore the interference by the downlink signals for the user terminal UE 1, and therefore extracts and adequately decodes the downlink signal for the subject terminal without carrying out interference cancellation by means of an SIC.

In this way, NOMA achieves improved spectral efficiency by multiplexing a plurality of user terminals UE 1 and UE 2 with varying channel gains (received SINRs and/or the like) over the same radio resource on the transmitting end and employing an interference canceller on the receiving end.

In the above-described radio communication system, NOMA is primarily used to increase the capacity of access links, and the use of NOMA for increasing the capacity of links other than access links has not been studied to a sufficient degree. So, the present inventors have made the present invention in order to provide various system implementations with increased capacity by applying NOMA to wireless backhaul links in a radio communication system in which relay technology is employed. That is, it is a gist of the present invention to employ NOMA when multiplexing a plurality of links including at least one backhaul link. By means of this structure, the overall radio network capacity is increased in various system implementations including not only access links, but also including backhaul links.

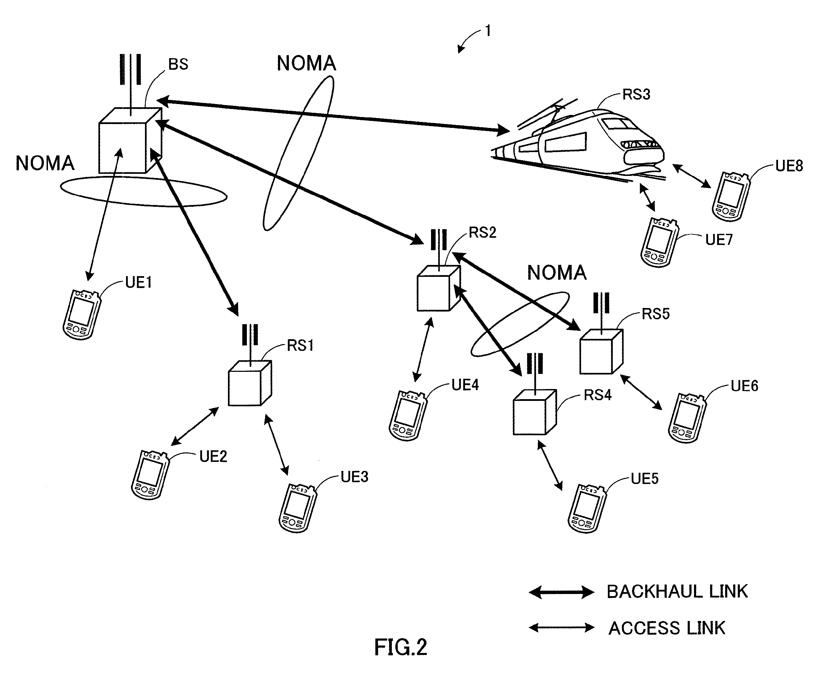

System structures of a radio communication system 1 where the use of NOMA is presumed will be described below with reference to FIG. 2. FIG. 2 illustrates a radio communication system 1 where relay technology is employed. Note that the radio communication system 1 illustrated in FIG. 2 is an example and is by no means limited to this structure. Any radio system including at least one backhaul link will suffice. The radio communication system 1 may assume a structure in which a radio base station BS and a user terminal UE communicate via relay stations RS, and a structure in which a radio base station BS and a user terminal UE communicate directly. Also, in addition to regular relay stations RS 1 and RS 2, a mobile relay station RS 3 and multi-hop relay stations RS 4 and RS 5 may be used as relay stations RS.

To the radio base station BS, a user terminal UE 1 is connected via an access link, and the relay stations RS 1 and RS 2, and the mobile relay station RS 3, which may be a train car and/or the like, are connected via backhaul links. User terminals UE 2 and UE 3 are connected to the relay station RS 1 via an access link. To the relay station RS 2, a user terminal UE 4 is connected via an access link, and the multi-hop relay stations RS 4 and RS 5 are connected via backhaul links. User terminals UE 5 and UE 6 are connected to the multi-hop relay stations RS 4 and RS 5, respectively, via access links. User terminals UE 7 and UE 8 are connected to the mobile base station RS 3 via access links.

In this radio communication system 1, the user terminal UE 1 and the regular relay station RS 1 are non-orthogonal-multiplexed by NOMA, and the regular relay station RS 2 and the mobile relay station RS 3 are non-orthogonal-multiplexed by NOMA. In this way, NOMA is applied not only between access links, but also is applied to access links and backhaul links, and between backhaul links. Furthermore, the multi-hop relay stations RS 4 and RS 5, which are lower communication devices than the relay station RS 2, are non-orthogonal-multiplexed by NOMA, and NOMA is applied between the multi-hop backhaul links as well.

When NOMA is applied, a downlink signal for the user terminal UE 1 and a downlink signal for the relay station RS 1 are non-orthogonal-multiplexed over the same radio resource in the radio base station BS, a downlink signal for the relay station RS 2 and a downlink signal for the mobile relay station RS 3 are non-orthogonal-multiplexed over the same radio resource. Also, in the relay station RS 2, downlink signals for the multi-hop relay stations RS 4 and RS 5 are non-orthogonal-multiplexed over the same radio resource. Then, the downlink signals that are non-orthogonal-multiplexed upon the same radio resource are transmitted with different transmission power. Note that, similar to downlink signals, uplink signals may also be non-orthogonal-multiplexed over the same radio resource, with different transmission power.

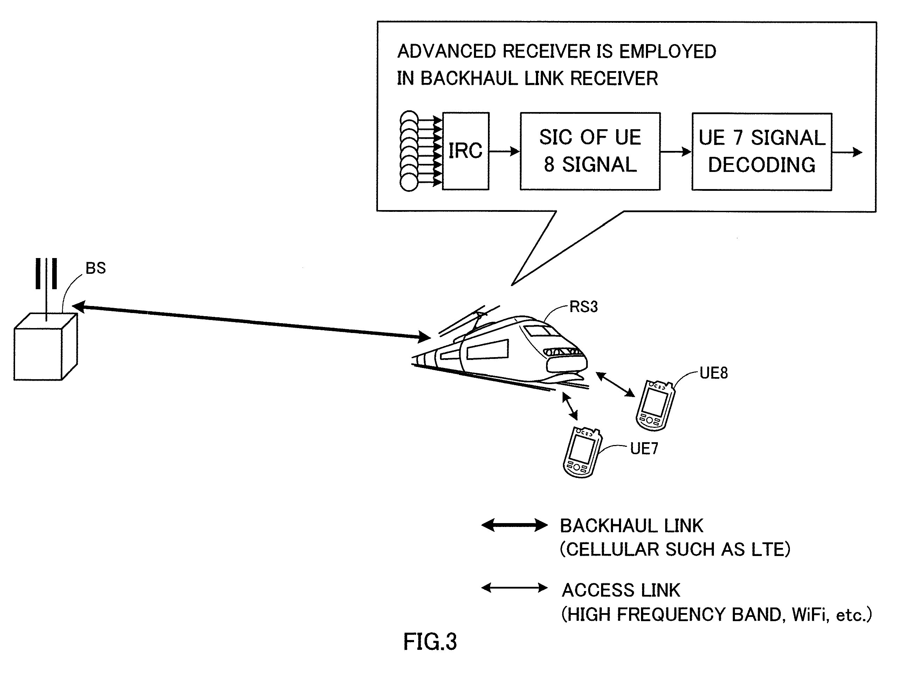

Now, each relay station RS may conveniently adopt a receiver that is more advanced than that of a regular user terminal UE. The advanced receiver may be a receiver with many receiving antennas such as one used in the radio base station BS, a receiver which can implement complex algorithms such as an iterative (turbo) canceller, and so on. For example, as illustrated in FIG. 3, in a radio communication system in which a mobile relay station relays backhaul links as cellular such as LTE and relays access links as high frequency bands, WiFi and so on, a structure to use IRC (Interference Rejection Combining) and an interference canceller for the backhaul receiver may be employed.

Note that the radio communication system 1 may be referred to as, for example, "IMT-advanced," or may be referred to as "4G" or "FRA (Future Radio Access). Also, the radio base station BS and the relay stations RS may be referred to as "transmission points" or "transmitting/receiving points." Also, the user terminal UE is terminal to support various communication schemes such as LTE and LTE-A, and may be either a mobile communication terminal or a stationary communication terminal. Furthermore, although not illustrated in FIG. 2, the radio base station BS is connected to a core network via unillustrated higher station apparatus. The higher station apparatus may be, for example, access gateway apparatus, a radio network controller (RNC), a mobility management entity (MME) and so on, but is by no means limited to these.

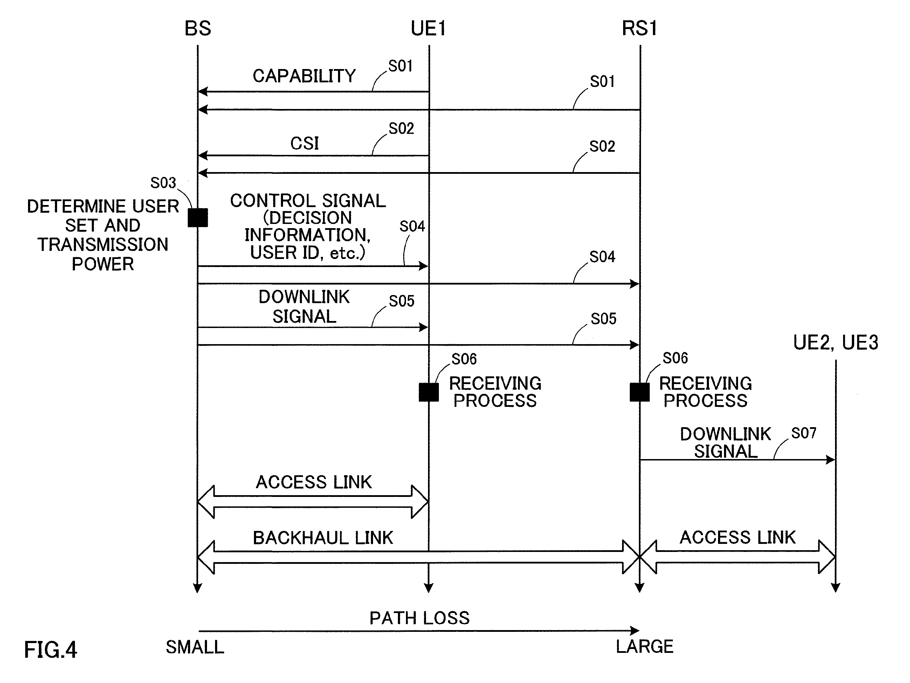

Now, an example of communication steps in the above-described radio communication system 1 will be described below. First, a case will be described with reference to FIG. 4 in which NOMA is applied to access links and backhaul links. Here, communication steps between the radio base station BS, the user terminal UE 1 and the relay station RS 1 illustrated in FIG. 2 will be described as an example.

The user terminal UE 1 and the relay station RS 1 each transmit "capability," which indicates whether or not an interference canceller for non-orthogonal multiplexing is provided, to the radio base station BS, as support information to indicates whether or not non-orthogonal multiplexing is supported (step S01). Note that a receiver that is more advanced than a regular user terminal UE's receiver may be reported as capability, or information that identifies between a regular relay station and a mobile relay station may be reported as capability. Note that the time to report capability may be the time to start connecting with the radio base station BS, or may be the time to feed back channel gain, which will be described later.

Also, the user terminal UE 1 and the relay station RS 1 receive reference signals from the radio base station BS, calculate channel gain from the reference signals, and send CSI (Channel State Information) as a feedback to the radio base station BS (step S02). In this case, the user terminal UE 1 indicates greater path loss than the relay station RS 1, and the user terminal UE 1 indicates greater channel gain than the relay station RS 1. Note that, as for the reference signals, the CSI-RS (Channel State Information Reference Signal), the DM-RS (DeModulation Reference Signal), the CRS (Cell-Specific Reference Signal) and/or the like may be used.

Next, the radio base station BS determines the user set to non-orthogonal-multiplex over the same radio resource, based on the capabilities and CSIs received from communication devices belonging in the coverage area (step S03). Also, in each communication device determined as the user set, different transmission power is configured. Here, the user terminal UE 1 and the relay station RS 1 are determined as the user set, a downlink signal for the user terminal UE 1 and a downlink signals for the relay station RS 1 are non-orthogonal-multiplexed over the same radio resource. Also, since the user terminal UE 1 illustrates greater channel gain than the relay station RS 1, the transmission power of the user terminal UE 1 is configured lower than that of the relay station RS 1.

Next, the radio base station BS transmits non-orthogonal multiplexing control signals to the user terminal UE 1 and the relay station RS 1 (step S04). The control signals contain, as downlink control information, decision information to represent whether or not non-orthogonal-multiplex is applied, and information that is necessary to cancel interference upon demodulation and decoding. The information that is necessary to cancel interference includes information for detecting control signals for other communication devices (interfering users) to be subject to interference cancellation in the same radio resource, such as, for example, the user IDs (RNTIs) and CCE (Control Channel Element) indices that are subject to interference cancellation, and so on. Also, the control signals may include, as uplink control information, information for making a plurality of communication devices transmit uplink signals to the radio base station BS using the same radio resource.

Here, the downlink signal for the relay station RS 1 with greater transmission power interferes with the downlink signal for the user terminal UE 1. Consequently, with the decision information, the user terminal UE 1 is reported that non-orthogonal-multiplexing will be applied, and the user ID of the relay station RS 1 to be subject to interference cancellation and so on are reported with the information that is necessary to cancel interference. By contrast with this, the downlink signal for the relay station RS 1 does not interfere with the downlink signal for user terminal UE 1 with lower transmission power. Consequently, through the decision information, the relay station RS 1 is reported that non-orthogonal-multiplexing will be applied, and the information that is necessary to cancel interference is not reported. Note that it is equally possible to employ a structure in which the decision information is not reported to the relay station RS 1.

Next, the radio base station BS transmits the downlink signals that are non-orthogonal-multiplexed over the same radio resource, to the user terminal UE 1 and the relay station RS 1, with different transmission power (step S05). Next, the user terminal UE 1 and the relay station RS 1 each receive the downlink signals and demodulate and decode the downlink signal for the subject terminal/station (step S06). In this case, the user terminal UE 1 decides that non-orthogonal multiplexing is applied, based on the decision information, and identifies the relay station RS 1, which is subject to interference cancellation, based on the information that is necessary to cancel interference. Then, the user terminal UE 1 cancels the interference by the downlink signal for the relay station RS 1 that is non-orthogonal-multiplexed over the same radio resource, by means of the interference canceller, and demodulates and decodes the downlink signals for the subject terminal.

On the other hand, the relay station RS 1 decides that non-orthogonal multiplexing is applied, based on the decision information. Then, the relay station RS 1 ignores the interference by the downlink signal for the user terminal UE 1 that is non-orthogonal-multiplexed over the same radio resource, and demodulates and decodes the downlink signal for the subject station. Also, the relay station RS 1 multiplexes the downlink signals for the user terminals UE 2 and UE 3, which the relay station RS 1 has received as downlink signals for the subject station, on a radio resource that is different from the radio resource used in non-orthogonal-multiplexing in the radio base station BS, and transmits the downlink signals (step S07).

Also, the user terminal UE 1 and the relay station RS 1 transmit uplink signals to the radio base station BS in the same radio resource, based on the uplink control information contained in the control signals. The receiver of the radio base station BS carries out signal-demultiplexing of the received uplink signals with the interference canceller, and demodulates and decodes the individual uplink signals. Also, the control signals may contain, as uplink control information, the volume of access link traffic.

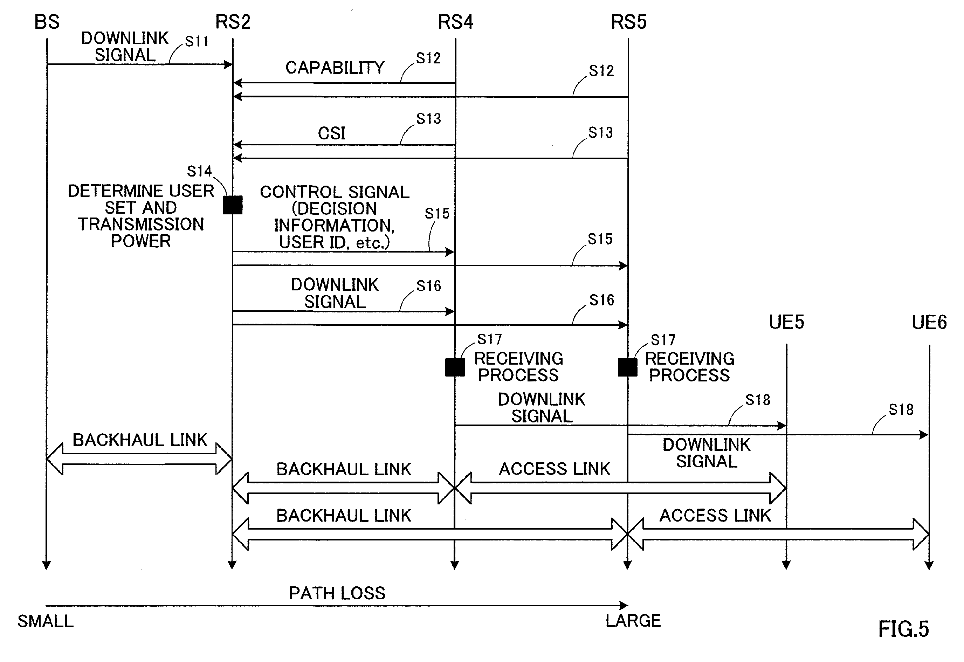

A case will be described with reference to FIG. 5 where NOMA is applied to multi-hop backhaul links. Here, communication steps between the relay station RS 2 and the multi-hop relay stations RS 4 and RS 5 illustrated in FIG. 2 will be described. Note that the communication process between the radio base station BS, and the relay station RS 2 and the mobile relay station RS 3 is the same as the communication process illustrated in FIG. 4, and therefore will not be described again. The relay station RS 2 receives downlink signals for lower communication devices connected to the subject station, as downlink signals for the subject station from the radio base station BS (step S11). Here, downlink signals for the multi-hop relay stations RS 4 and RS 5 are received as downlink signals for the subject station.

The multi-hop relay stations RS 4 and RS 5 transmit capability which indicates whether or not an interference canceller for non-orthogonal multiplexing is provided, to the relay station RS 2, as non-orthogonal multiplexing support information (step S12). Note that a receiver that is more advanced than that of a regular user terminal UE may be reported as capability, or information that identifies between a regular relay station and a mobile relay station may be reported as capability. Note that the time to report capability may be the time to start connecting with the relay station RS 2, or may be the time to feed back channel gain, which will be described later.

Also, the multi-hop relay stations RS 4 and RS 5 receive reference signals from the relay station RS 2, and calculate channel gain from the reference signals and feed back CSI to the relay station RS 2 (step S13). In this case, the multi-hop relay station RS 4 indicates lower path loss than the multi-hop relay station RS 5, and the multi-hop relay station RS 4 indicates greater channel gain than the multi-hop relay station RS 5. Note that the multi-hop relay stations RS 4 and RS 5 may also be structured to receive reference signals from the radio base station BS.

Next, based on the capabilities and CSIs received from communication devices belonging in the coverage area, the relay station RS 2 determines the user set to multiplex over the same radio resource (step S14). Also, different transmission power is configured in each communication device determined as the user set. Here, the multi-hop relay stations RS 4 and RS 5 are determined as the user set, and downlink signals for the multi-hop relay stations RS 4 and RS 5 are multiplexed over the same radio resource. Also, since the multi-hop relay station RS 4 indicates greater channel gain than the multi-hop relay station RS 5, the transmission power of the multi-hop relay station RS 4 is configured lower than that of the multi-hop relay station RS 5.

Next, the relay station RS 2 transmits non-orthogonal multiplexing control signals to the multi-hop relay stations RS 4 and RS 5 (step S15). In this case, the downlink signal for the multi-hop relay station RS 5 with greater transmission power interferes with the downlink signal for the multi-hop relay station RS 4. Consequently, by means of the decision information in the control signal, the multi-hop relay station RS 4 is reported that non-orthogonal-multiplexing will be applied, and, the user ID of the multi-hop relay station RS 5 that is subject to interference cancellation and so on are reported with the information that is necessary to cancel interference in the control signal. By contrast with this, the downlink signal for the multi-hop relay station RS 4 with lower transmission power does not interfere with the downlink signal for the multi-hop relay station RS 5. Consequently, the multi-hop relay station RS 5 is reported that non-orthogonal-multiplexing will be applied, by means of the decision information in the control signal, and the information that is necessary to cancel interference is not reported.

Next, the relay station RS 2 transmits downlink signals that are non-orthogonal-multiplexed over the same radio resource to the multi-hop relay stations RS 4 and RS 5, with different transmission power (step S16). Next, the multi-hop relay stations RS 4 and RS 5 receive the downlink signals, and demodulate and decode the downlink signals for the subject stations (step S17). In this case, the multi-hop relay station RS 4 decides that non-orthogonal multiplexing is applied, based on the decision information, and identifies the multi-hop relay station RS 5 that is subject to interference cancellation, based on the information that is necessary to cancel interference. Then, the multi-hop relay station RS 4 cancels the interference by the downlink signal for the multi-hop relay station RS 5 that is non-orthogonal-multiplexed over the same radio resource, by means of the interference canceller, and demodulates and decodes the downlink signal for the subject station.

On the other hand, the multi-hop relay station RS 5 decides that non-orthogonal multiplexing is applied, based on the decision information. Then, the multi-hop relay station RS 5 ignores the interference by the downlink signal for the multi-hop relay station RS 4 that is non-orthogonal-multiplexed over the same radio resource, and demodulates and decodes the downlink signal for the subject station. Then, the multi-hop relay stations RS 4 and RS 5 multiplex the downlink signals for the subject stations on a radio resource that is different from the radio resource used in non-orthogonal-multiplexing in the relay station RS 2, as downlink signals for the user terminals UE 5 and UE 6 (step S18).

Also, the multi-hop relay stations RS 4 and RS 5 transmit uplink signals to the relay station RS 2, using the same radio resource, based on the uplink control information contained in the control signals. The receiver of the relay station RS 2 carries out signal-demultiplexing of the received uplink signals with the interference canceller, and demodulates and decodes the individual uplink signals. Also, the control signals may contain, as uplink control information, the volume of access link traffic.

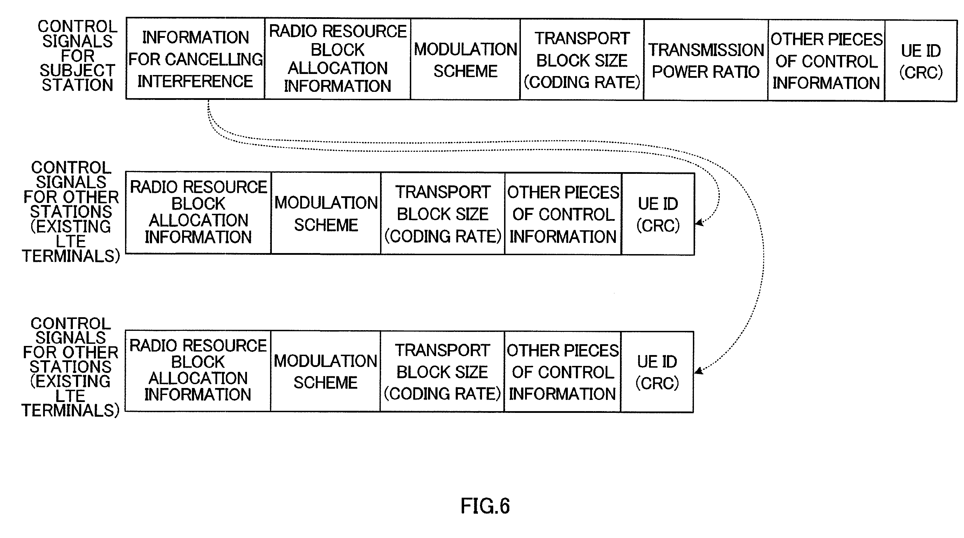

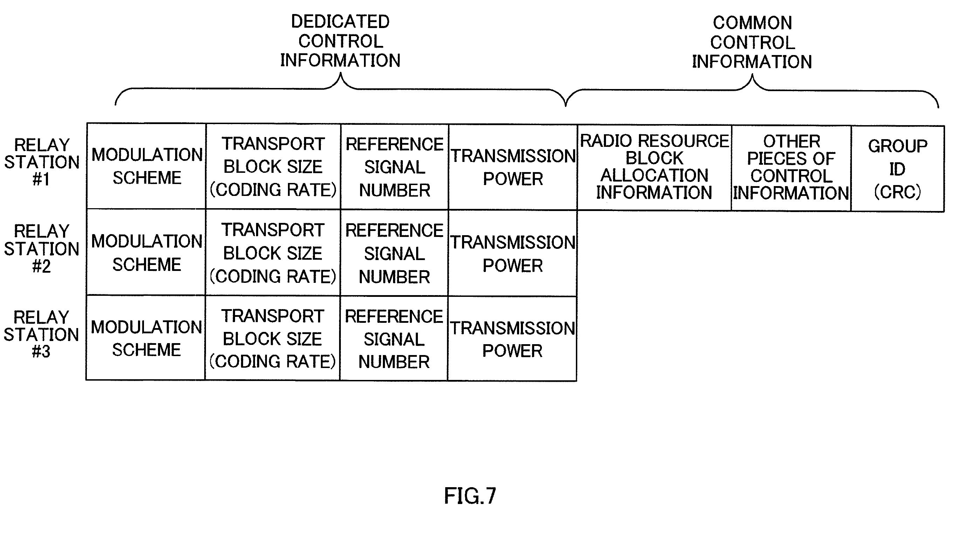

Now, in order to cancel the signals for communication devices that are subject to interference cancellation from received signals, relay stations and user terminals that are non-orthogonal-multiplexed need to demodulate and decode the signals for the communication devices that are subject to interference cancellation. To do so, the non-orthogonal-multiplexed relay stations and user terminals need to identify the radio resource allocation information, information about the modulation scheme, and coding rate, and so on, with respect to the communication devices that are subject to interference cancellation. So, the present embodiment is designed so that the radio resource allocation information, the modulation scheme, the coding rate and so on for communication devices that are subject to interference cancellation can be identified by using control signals. Now, examples of control signals in NOMA will be described below with reference to FIG. 6 and FIG. 7.

FIG. 6 illustrates an example control channel structure which allows a relay station that supports NOMA to execute demodulation and decoding for communication devices that are subject to interference cancellation (here, existing LTE terminals). This example control channel structure presumes downlink control information to use in downlink resource allocation -- that is, DL assignments. The control signal is structured to include information for cancelling interference, radio resource block allocation information, the modulation scheme, the transport block size (coding rate), the transmission power ratio, other pieces of control information, and identification information.

The information for cancelling interference may include information for demodulating the control signals for lower-level communication devices that are subject to interference cancellation -- that is, information for demodulating the control signals for other communication devices with greater path loss than that of the subject station. The information for cancelling interference is by no means limited to the user ID (RNTI) of the interference cancellation target, and any information whereby the control signals for communication devices that are subject to interference cancellation can be demodulated, such as radio resource locations (CCE indices), will suffice. Also, the control signals may include decision information that indicates whether or not non-orthogonal-multiplexing is applied, or whether or not non-orthogonal-multiplexing is applied may be decided based on the presence/absence of the transmission power ratio.

In the example control channel structure illustrated in FIG. 6, the relay station identifies the user IDs or the CCE indices of user terminals subject to interference cancelation by receiving the control signal for the subject station. Then, the relay station reads the control signals for a plurality of LTE terminals associated with the user IDs or CCE indices, demodulate and decode the downlink signals for a plurality of LTE terminals subject to interference cancelation, and cancel interference. In this way, the relay station is structured to be capable of reading control signals for a plurality of communication devices that are subject to interference cancellation, all at once.

FIG. 7 illustrates an example control channel structure in which radio resources are allocated to each communication deice all at once (here, to relay stations #1 to #3). This example control channel structure presumes uplink control information to use in uplink resource allocationthat is, UL grants -- but may also be applicable to DL assignments as well, which are used in downlink resource allocation. The control signal is formed by including dedicated control information that is specific to each communication device, and common control information that is shared between the communication devices.

The dedicated control information includes the modulation scheme, the transport block size (coding rate), the reference signal number and the transmission power. The common control information includes radio resource block allocation information, other pieces of control information and shared identification information. The shared identification information is, for example, a group ID that is common between the relay stations that are non-orthogonal-multiplexed over the same radio resource.

In the example control channel structure illustrated in FIG. 7, relay stations #1 to #3 receive the control signal, and, based on the shared identification information (group ID) included in the common control information, transmit uplink signals by using the same radio resource. Also, when this example channel structure is used for downlink control information, it is also possible to identify other relay stations to be subject to interference cancelation from the shared identification information (group ID) included in the common control information, demodulate and decode the downlink signals for the other relay stations subject to interference cancelation, and cancel interference. Also, the control signal may include decision information that indicates whether or not non-orthogonal-multiplexing is applied, or whether or not non-orthogonal-multiplexing is applied may be decided based on the presence/absence of the shared identification information.

Note that the control signals may be transmitted using any of the PDCCH (Physical Downlink Control Channel), the EPDCCH (Enhanced Physical Downlink Control Channel) and the RPDCCH (RN-specific Physical Downlink Control Channel). Also, the control information in the control signals may be included in higher control information that is reported by way of higher layer signaling (such as RRC signaling). Note that each of the above-described example control channel structures is not limited to backhaul links, and may be applied to access links, D2D, whereby user terminals communicate directly with each other, and so on.

Next, the radio access schemes used in the backhaul links and access links in the radio communication system 1 according to the present embodiment will be described below. OFDMA (Orthogonal Frequency Division Multiple Access) and NOMA are applied to the downlink, and SC-FDMA (Single Carrier Frequency Division Multiple Access) and NOMA are applied to the uplink. OFDMA is a multi-carrier transmission scheme to divide the transmission band into subbands and orthogonal-multiplex user terminals UE, and SC-FDMA is a single-carrier transmission scheme to allocate user terminals to radio resources that are continuous in the frequency direction. NOMA is a multi-carrier transmission scheme to non-orthogonal-multiplex user terminal UE with different transmission power per subband.

In the radio communication system 1, a downlink shared data channel (PDSCH) to be used by each user terminal UE on a shared basis, downlink L1/L2 control channels (PDCCH, PCFICH and PHICH), a broadcast channel (PBCH) and so on are used as downlink communication channels. User data and higher control information are transmitted by the PDSCH (Physical Downlink Shared Channel). Scheduling information for the PDSCH and the PUSCH is transmitted by the PDCCH (Physical Downlink Control Channel). The number of OFDM symbols to for the PDCCH is transmitted by the PCFICH (Physical Control Format Indicator Channel). HARQ ACKs/NACKs in response to the PUSCH are transmitted by the PHICH (Physical Hybrid-ARQ Indicator Channel).

Also, in the radio communication system 1, an uplink shared channel (PUSCH) to be used by each user terminal UE on a shared basis, an uplink control channel (PUCCH), a random access channel (PRACH) and so on are used as uplink communication channels. User data and higher layer control information are transmitted by the PUSCH (Physical Uplink Shared Channel). Also, downlink channel state information (CSI), ACKs/NACKs and so on are transmitted by the PUCCH (Physical Uplink Control Channel) or the PUSCH.

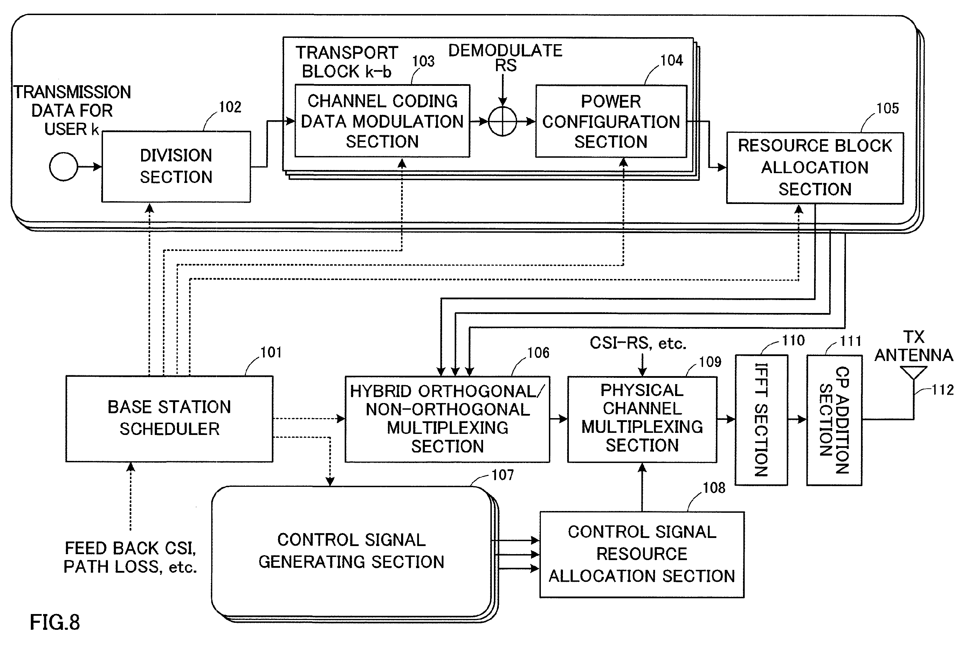

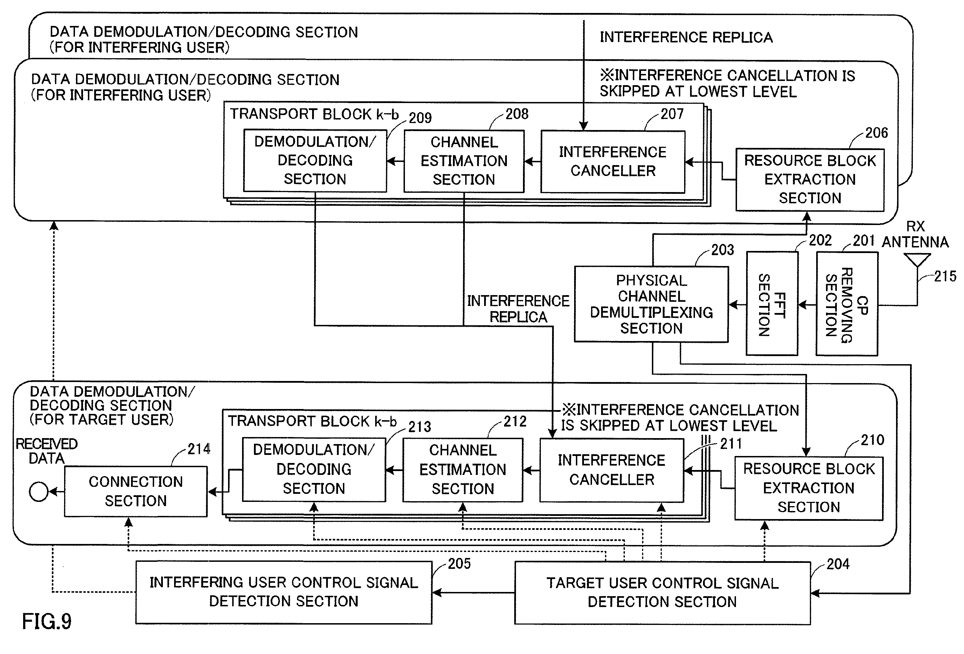

Next, a functional block structure of the radio communication system will be described. FIG. 8 illustrates a functional block structure of a radio base station BS, and FIG. 9 illustrates a functional block structure of a relay station RS (covering relay stations RS 1 and RS 2, a mobile relay station RS 3 and multi-hop relay stations RS 4 and RS 5). Note that, although FIG. 8 and FIG. 9 illustrate only part of the structures, the radio base station BS and the relay station RS have required components without shortage. Also, a user terminal UE is structured the same as the relay station RS, and therefore description will be omitted.

As illustrated in FIG. 8, the radio base station BS has a base station scheduler 101, a division section 102, a channel coding data modulation section 103, a power configuration section 104, a resource block allocation section 105, a hybrid orthogonal/non-orthogonal multiplexing section 106, a control signal generating section 107, a control signal resource allocation section 108, a physical channel multiplexing section 109, an IFFT section 110 and a CP addition section 111.

The base station scheduler 101 controls each function block of the radio base station BS based on CSI feedback from the relay station RS and user terminal UE, path loss and so on. The base station scheduler 101 executes control so that downlink signals to be non-orthogonal-multiplexed are allocated to the same radio resource and transmission data to be orthogonal-multiplexed is allocated to varying radio resources. Transmission data that is non-orthogonal-multiplexed over the same radio resource is scheduled so that path loss increases. Also, the base station scheduler 101 determines the transmission power, the transport block sizes (coding rates) and the modulation schemes for the relay station RS and the user terminals UE.

The division section 102 is controlled by the base station scheduler 101 and divides the transmission data on a per subband basis. The channel coding data modulation section 103 is controlled by the base station scheduler 101, and encodes and modulates the data signals for every subband b of user k. The power configuration section 104 is controlled by the base station scheduler 101, and configures the power of the data signals and the demodulation RS for every subband b of user k. In this case, as for the data signals to be non-orthogonal-multiplexed over the same radio resource, the total transmission power the radio resource is divided in a ratio in accordance with path loss and so on. The resource block allocation section 105 is controlled by the base station scheduler 101 and allocates the data signals to resource blocks, on a per user k basis.

The hybrid orthogonal/non-orthogonal multiplexing section 106 is controlled by the base station scheduler 101, and multiplexes the data signals output from the resource block allocation section 105. The data signals for non-orthogonal multiplexing are multiplexed over the same resource block, and the data signals for orthogonal-multiplexing are multiplexed over varying resource blocks.

The control signal generating section 107 generates control signals for the relay station RS and the user terminal UE. For example, the control signal generating section 107 may generate control signals including downlink control information for demodulating and decoding the data signals of interfering users (see FIG. 6). The downlink control information is structured to include information for cancelling interference, radio resource block allocation information, the modulation scheme, the transport block size (coding rate), the transmission power ratio, other pieces of control information and identification information. The information for cancelling interference is information whereby the control signals for interfering users can be detected, such as user IDs (RNTIs), radio resource locations (CCE indices) and so on.

Also, the control signal generating section 107 may generate a control signal including uplink control information for allocating radio resources to the relay station RS and the user terminal UE all together (see FIG. 7). This control signal is formed by including dedicated control information that is specific to each of the relay station RS and the user terminal UE, and common control information that is shared between the relay station RS and the user terminal UE. The dedicated control information includes the modulation scheme, the transport block size (coding rate), the reference signal number and the transmission power, and the common control information includes radio resource block allocation information, other pieces of control information and shared identification information. The shared identification information may be a group ID that is shared between the relay stations that are non-orthogonal-multiplexed over the same radio resource.

Note that the control signal generating section 107 may generate one or both of the above-noted two kinds of control signals. The control signal resource allocation section 108 allocates the control signals output from the control signal generating section 107 to resource blocks.

The physical channel multiplexing section 109 multiplexes the data signals output from the hybrid orthogonal/non-orthogonal multiplexing section 106, the control signals output from the control signal resource allocation section 108, and reference signals such as the CSI-RS, over a physical channel. Radio signals that are output from the physical channel multiplexing section 109 are subjected to an IFFT process in the IFFT section 110, have cyclic prefixes added thereto in the CP addition section 111 and transmitted from the transmitting antennas 112 to the relay station RS and the user terminal UE. In this case, the radio signals from the radio base station BS to the relay station RS are transmitted via a backhaul link, and the radio signals from the radio base station BS to the user terminal UE are transmitted via an access link.

As illustrated in FIG. 9, the relay station RS has a CP removing section 201, an FFT section 202, a physical channel demultiplexing section 203, a target user control signal detection section 204 and an interfering user control signal detection section 205. Also, the relay station RS has a resource block extraction section 206, an interference canceller 207, a channel estimation section 208 and a demodulation/decoding section 209 for interfering users (subject to interference cancellation), and has a resource block extraction section 210, an interference canceller 211, a channel estimation section 212, a demodulation/decoding section 213 and a connection section 214 for target users (subject station). Radio signals that are received in the receiving antenna 215 have the cyclic prefixes removed in the CP removing section 201, subjected to an FFT process in the FFT section 202 and input in the physical channel demultiplexing section 203.

The physical channel demultiplexing section 203 demultiplexes the radio signals output from the CP removing section 201, on a per physical channel basis. The demultiplexed signals are input in the target user control signal detection section 204, the resource block extraction section 206 for interfering users and the resource block extraction section 210 for target users. The target user control signal detection section 204 detects the control signal for the target user, that is, the subject station. The target user control signal detection section 204 provides each piece of control information contained in the control signal for the subject station, to the resource block extraction section 210, the interference canceller 211, the channel estimation section 212, the demodulation/decoding section 213 and the connection section 214 for target users. Also, the target user control signal detection section 204 outputs the control signal for the subject station to the interfering user control signal detection section 205.

The interfering user control signal detection section 205 detects the control signals for interfering users from the information for cancelling interference that is contained in the data signal for the subject stationthat is, the user IDs, the CCE indices, the group ID and so on of interfering users. The interfering user control signal detection section 205 provides each piece of the control information contained in the control signals for interfering users to the resource block extraction section 206, the interference canceller 207, the channel estimation section 208 and the demodulation/decoding section 209 for interfering users.

The resource block extraction section 206 for interfering users extracts the resource blocks where the data signals for interfering users are allocated, based on the interfering user control information provided from the interfering user control signal detection section 205. The interference canceller 207 removes lower-level interference replicas -- that is, signals for other interfering users with larger path loss and larger transmission power -- for every subband b of user k. In this case, in the event the subject station indicates the lowest level -- that is, when the transmission power is greater than that of other interfering users' interference replicasthe interference canceller 207 skips this process. The channel estimation section 208 performs channel estimation of the data signals, per subband b of user k, and the demodulation/decoding section 209 demodulates and decodes the results and generates interference replicas. This interference replica generating process is repeated for the number of interfering users.

The resource block extraction section 210 for the subject station extracts the resource block where the data signal for the subject station is allocated, based on the control information for the subject station provided from the target user control signal detection section 204. The interference canceller 211 removes interference replicas of interfering users -- that is, the data signals for interfering users -- for every subband b of user k. In this case, in the event the subject station indicates the lowest level -- that is, when the transmission power is greater than that of other interfering users -- the interference canceller 211 skips this process. The channel estimation section 212 carries out channel estimation of the data signals per subband b of user k, and the demodulation/decoding section 213 demodulates and decodes the results, and generates data signals. Then, the connection section 214 couples the data signal of each subband and generates received data.

Also, the relay station RS allocates the received data received from the radio base station BS to a radio resource that is different from the radio resource allocated in the radio base station BS. Then, the relay station RS carries out transmission to lower communication devices that are connected to the subject station (for example, user terminals and multi-hop relay stations). Consequently, although not described in detail here, the relay station RS has a multiplexing section that multiplexes downlink signals for lower communication devices, and a transmission section that transmits the downlink signals to the lower communication devices. Also, the relay station RS assumes a structure to report support information, such as "capability" to indicate whether or not non-orthogonal multiplexing is supported, to the radio base station BS.

Also, it is equally possible to apply an interference canceller to the radio base station BS. In this case, the radio base station BS has a receiving section that cancels the mutual interference between uplink signals transmitted from a plurality of communication devices (relay stations RS and user terminals UE) by using the same radio resource, and receives the uplink signal for each communication device. In this case, the radio base station BS transmits the control signal illustrated in FIG. 7 in a UL grant, and commands each communication device to transmit uplink signals using the same radio resource. Also, although a structure to apply NOMA to backhaul links and access links has been described with the present embodiment, it is equally possible to apply NOMA to D2D, whereby user terminals communicate with each other directly.

As described above, with the radio communication system 1 according to the present embodiment, non-orthogonal multiple access, which carries out non-orthogonal multiplexing over the same radio resource, with different transmission power, is not only applied to access links that connect between radio base stations BS and user terminals UE, but also is applied to wireless backhaul links that connect between radio base stations BS and relay stations RS. By this means, it is not only possible to increase the capacity of access links, but also to increase the capacity of wireless backhaul links as well. Also, it is possible to increase the overall radio network capacity by applying non-orthogonal multiple access to various system implementations including backhaul links.

The present invention is by no means limited to the above-described embodiment, and can be implemented with various changes. For example, without departing from the scope of the present invention, it is possible to appropriately change and implement the number of carriers, the bandwidth of carriers, the signaling method, the number of processing sections and the steps of process in in the above description. Besides, the present invention can be implemented in various modifications without departing from the scope of the present invention.

The disclosure of Japanese Patent Application No. 2013-172993, filed on August 23, 2013, including the specification, drawings and abstract, is incorporated herein by reference in its entirety.

## Claims

1. A radio base station that is connected to a relay station via a backhaul link and communicates with a user terminal via the relay station, the radio base station comprising:
a multiplexing section that non-orthogonal-multiplexes downlink signals for a plurality of communication devices including at least one relay station, over a same radio resource, with different transmission power; and
a transmission section that transmits the downlink signals to the plurality of communication devices with the different transmission power.

2. The radio base station according to claim 1, further comprising: a receiving section that cancels mutual interference between uplink signals transmitted from the plurality of communication devices by using a same radio resource so as to receive an uplink signal of each communication device.

3. The radio base station according to claim 1, further comprising:
a control signal generating section that generates a control signal including information for detecting a control signal for another communication device, the another communication device being subject to interference cancellation in relation to at least one of the plurality of communication devices,
wherein the transmission section transmits the generated control signal to the plurality of communication devices.

4. The radio base station according to claim 3, wherein the control signal generating section generates, as the information for detecting the control signal for the another communication device, the control signal including one of an individual user ID and a CCE index of the another communication device.

5. The radio base station according to claim 1, further comprising:
a control signal generating section that generates a control signal including dedicated control information which is specific to each of the plurality of communication devices that are non-orthogonal-multiplexed over the same radio resource, and common control information which is common between the plurality of communication devices, wherein
the common control information includes identification information that is shared between the plurality of communication devices, and
the transmission section transmits the generated control signal to the plurality of communication devices.

6. The radio base station according to claim 5, wherein the common control information includes information about allocation of a same radio resource with respect to uplink signals for the plurality of communication devices.

7. The radio base station according to claim 1, wherein the multiplexing section performs non-orthogonal-multiplexing for the plurality of communication devices based on support information which indicates whether or not non-orthogonal multiplexing is supported, acquired from the plurality of communication devices.

8. A relay station that is connected to a radio base station via a backhaul link and relays communication between the radio base station and a user terminal, the relay station comprising:
a receiving section that cancels interference by a downlink signal for another communication device, which is non-orthogonal-multiplexed in the radio base station, over a same radio resource, with different transmission power, so as to receive a downlink signal for a lower communication device connected to the relay station, as a downlink signal for the relay station;
a multiplexing section that multiplexes the downlink signal for the lower communication device over a radio resource that is different from the radio resource that is used in non-orthogonal-multiplexing in the radio base station; and
a transmission section that transmits the downlink signal to the lower communication device.

9. The relay station according to claim 8, wherein:
the multiplexing section non-orthogonal-multiplexes the downlink signals for the lower communication devices including at least one lower relay station, over a same radio resource that is different from the radio resource used in non-orthogonal-multiplexing in the radio base station, with different transmission power; and
the transmission section transmits the downlink signals to the lower communication devices with the different transmission power.

10. A radio communication method to connect between a radio base station and a relay station via a backhaul link and relay communication between the radio base station and a user terminal via the relay station, the radio communication method comprising:
non-orthogonal-multiplexing, in the radio base station, downlink signals for a plurality of communication devices including at least one relay station, over a same radio resource, with different transmission power;
transmitting, in the radio base station, the downlink signals to the plurality of communication devices with the different transmission power;
canceling, in the relay station, interference by a downlink signal for another communication device, which is non-orthogonal-multiplexed in the radio base station, over a same radio resource, with the different transmission power, so as to receive a downlink signal for a lower communication device connected to the relay station, as a downlink signal for the relay station; and
transmitting, in the relay station, the downlink signal to the lower communication device, using a radio resource that is different from the radio resource that is used in non-orthogonal-multiplexing in the radio base station.
